# FASCICULE DE BREVET EUROPEEN

(11) **EP 0 477 092 B1**
(45) Date de publication et mention de la délivrance du brevet: **10.08.1994**
(21) Numéro de dépôt: 91402477.3
(22) Date de dépôt: 18.09.1991
(51) Int. Cl.: G01S 13/32

(54) **Procédé télémétrique pour mesurer de courtes distances**
Entfernungsmessverfahren zur Messung von kurzen Abständen
Range finding method for ranging over short distances

(30) Priorité: 18.09.1990 FR 9011482
(43) Date de publication de la demande: 25.03.1992
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Le Garrec, Guy, F-95110 Sannois (FR)
(74) Mandataire: Berrou, Paul

(56) Documents cités:
- US-A- 3 614 785
- US-A- 3 882 494
- US-A- 4 014 021
- US-A- 4 053 888
- US-A- 4 396 916

## Description

La présente invention a pour objet un procédé télémétrique pour mesurer de courtes distances. Elle s'applique notamment aux radars de proximétrie à émission continue qui mettent en oeuvre des dispositifs de corrélation utilisant des séquences logiques binaires.

Un proximètre ou radar télémètre pour mesurer de courtes distances monté sur un engin volant permet la mesure de la distance la plus courte du passage d'un autre engin volant. Les brevets d'invention publiés sous les numéros FR 2 286 391 correspondant du document de brevet US-A-4 014 021 et FR 2 580 080 et déposés au nom de la société demanderesse décrivent de tels proximètres. On en rappelle brièvement le principe de fonctionnement.

Un signal continu est modulé par une séquence pseudo-aléatoire comprenant un certain nombre de bits engendrés par un registre à décalage bouclé sur lui-même et délivrés à une fréquence d'horloge. Le signal modulé est émis par une antenne émettrice.

L'écho du signal modulé est détecté par une antenne réceptrice et corrélé avec le signal modulé retardé de manière connue. Lorsque le retard correspond exactement au trajet aller et retour de l'onde émise, par exemple après réflexion sur une cible, la fonction de corrélation est maximale. La tension d'erreur fournie en sortie du corrélateur commande la fréquence d'horloge qui augmente au fur et à mesure que l'engin détecté se rapproche. De cette manière, le radar déduit la distance à mesurer de la fréquence d'horloge.

On sait que ce type de radar ne fonctionne que dans une gamme de distances allant d'une trentaine de mètres à environ deux mètres. Lorsqu'aucun écho n'est détecté, la fréquence reste fixe et correspond à la limite de distance déterminée. A partir du moment où un engin mobile pénètre dans la zone de détection, la fréquence "s'accroche" sur la variation de distance par l'intermédiaire du signal de corrélation produit.

On peut montrer qu'avec les proximètres de l'art antérieur, pour cette gamme de distances localisables, l'engin porteur du radar doit ête éloigné d'environ 300 m de toute surface parasite réfléchissante (le sol par exemple).

En effet, la périodicité de la séquence pseudo-aléatoire entraîne une périodicité de la fonction de corrélation utilisée pour l'asservissement de la fréquence d'horloge. Cette périodicité implique l'existence d'une distance d'ambiguïté pour laquelle on ne peut distinguer un écho renvoyé par un objet proche ou situé au-delà de cette distance d'ambiguïté.

D'une manière générale, pour une séquence de n bits, la période de la fonction de corrélation est égale à (2ⁿ-1)T, à savoir 127 T si n égale 7 et où T est la période correspondant à la fréquence d'horloge. Cette période (2ⁿ-1)T correspond à la distance d'ambiguïté. Or, T diminue (ou, ce qui revient au même, la fréquence d'horloge augmente) lorsque la distance mesurée diminue, puisque celle-ci est asservie sur celle-là par la corrélation. Donc, la distance d'ambiguïté diminue avec le rapprochement de l'engin détecté, ce qui peut perturber la mesure en la rendant incertaine.

Par ailleurs, plusieurs signaux parasites peuvent venir perturber le signal détecté et fausser les mesures. Par exemple, un écho parasite renvoyé par une surface (le sol, par exemple) très supérieure à celle de l'engin à détecter présente une très grande amplitude (qui peut être dans un rapport 10⁴ avec l'amplitude de l'écho dû à l'engin à détecter). D'autres parasites peuvent être causés par une mauvaise décorrélation entre les antennes d'émission et de détection ou encore par des fuites en sortie du corrélateur.

Usuellement, pour éviter de prendre en compte ces parasites ou échos permanents, la détection est effectuée dans une bande de fréquences allant de 1 à 20 kHz qui correspond au glissement en fréquence dû à l'effet Doppler attendu pour les engins à détecter. Cette détection centrée sur la fréquence Doppler moyenne permet d'améliorer le rapport signal/bruit de la mesure.

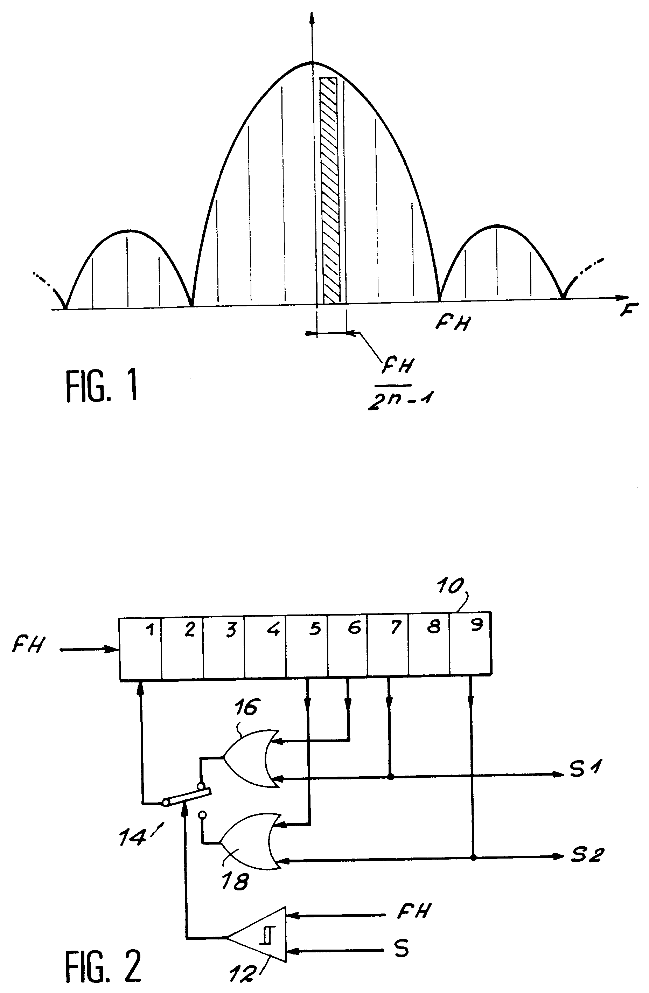

La figure 1 représente schématiquement l'allure du spectre en fréquence d'un signal modulé par une séquence de n bits délivrés à la fréquence d'horloge fH.

Ce spectre possède des raies espacées de fH/2ⁿ-1. Pour la simplicité de la représentation, le nombre de raies a été réduit sur la figure. La zone hachurée représente la zone de dispersion Doppler dans laquelle est effectuée la détection. On voit que la fréquence d'horloge et le nombre de bits sont choisis de manière à ce que la première raie du spectre ne tombe pas dans la zone de détection.

Au cours d'une détection, les raies s'écartent les unes des autres et le spectre s'étale.

On comprend qu'à un nombre de bits fixé, le filtrage impose une limite inférieure à la fréquence d'horloge.

Les limites de fonctionnement pour la fréquence d'horloge imposent un éloignement important des surfaces parasites pour la gamme de distances à mesurer (éloignement d'environ 300 m pour une gamme d'une trentaine de mètres).

Le but de la présente invention est de permettre une détection dans une gamme de distances de l'ordre de quelques dizaines de mètres tout en maintenant constamment une distance d'ambiguïté suffisamment grande pour autoriser des mesures à partir d'une distance aussi proche que vingt mètres du sol ou de toute autre surface parasite.

Pour cela, l'invention préconise d'adapter le nombre de bits de la séquence pseudo-aléatoire en fonction de la distance à mesurer. En d'autres termes, passé un seuil de distance lorsqu'un engin détecté se rapproche, le nombre de bits est augmenté de manière à augmenter la distance d'ambiguïté et à la maintenir suffisamment importante pour qu'elle ne perturbe pas la mesure. Le nombre de bits est choisi en fonction de la valeur de la fréquence d'horloge de façon à éviter que la première raie du spectre en fréquence du signal modulé émis ne pénètre dans la zone de dispersion Doppler où est effectuée la détection.

De manière plus précise, la présente invention concerne un procédé télémétrique pour mesurer de courtes distances consistant à émettre un signal électromagnétique modulé par une séquence pseudo-aléatoire composée d'un nombre n de bits délivrés à une fréquence d'horloge fH variable en fonction d'une mesure de corrélation entre un écho du signal modulé émis et le signal modulé retardé de manière connue, la fréquence d'horloge fH correspondant à la distance à mesurer. Selon une caractéristique de l'invention, la fréquence d'horloge fH varie dans un domaine de fonctionnement divisé en plusieurs gammes de fonctionnement ; le procédé consiste à modifier le nombre n de bits de la séquence pseudo-aléatoire en fonction des changements de gamme de fonctionnement de la fréquence d'horloge fH.

Un avantage important de ce procédé provient du fait que la variation en longueur de la séquence pseudo-aléatoire n'engendre aucune perturbation sur l'asservissement en distance (ou plus précisément en fréquence). En effet, les pentes des courbes de corrélation ne sont pas modifiées par les variations du nombre de bits.

Selon une autre caractéristique de l'invention, le nombre n de bits de la séquence pseudo-aléatoire est augmenté lorsqu'on passe d'une gamme inférieure à une gamme supérieure de fréquence d'horloge.

De manière avantageuse, le nombre de bits de la séquence pseudo-aléatoire est choisi de manière à ce que le rapport fH/2ⁿ-1 soit supérieur à une valeur fixée.

La valeur fixée est choisie au moins égale à la limite supérieure de la zone de dispersion Doppler hachurée sur la figure 1.

Selon une variante, le domaine de fonctionnement comporte au moins deux gammes de fonctionnement séparées par un seuil en fréquence correspondant à une distance sensiblement égale à six mètres.

Les caractéristiques et avantages de l'invention apparaîtront mieux après la description qui suit, donnée à titre explicatif et nullement limitatif. Cette description se réfère à des dessins annexés, sur lesquels :
- la figure 1, déjà décrite, représente schématiquement un spectre en fréquence d'un signal continu modulé par une séquence pseudo-aléatoire ; et
- la figure 2 représente schématiquement un dispositif pour la mise en oeuvre du procédé conforme à l'invention.

En référence à la figure 2, on décrit maintenant un exemple de réalisation d'un dispositif pour la mise en oeuvre du procédé conforme à l'invention. Des réalisations de proximètres sont largement décrites dans les brevets français numéros 2 286 391 et 2 580 080 précités. Ici, seule la partie concernant la délivrance de la séquence pseudo-aléatoire est donnée. On rappelle simplement que la séquence pseudo-aléatoire permet de moduler un signal continu qui, d'une part, est émis par une antenne émettrice et, d'autre part, est délivré à une entrée d'un système de corrélation après avoir été retardé de manière connue.

Un écho du signal modulé détecté par une antenne réceptrice est corrélé avec le signal modulé retardé pour engendrer une tension d'erreur permettant l'asservissement d'une horloge (non représentée sur la figure 2).

L'horloge délivre un signal d'horloge possédant une fréquence d'horloge fH représentative de la distance entre l'engin porteur du proximètre et l'objet détecté.

La séquence pseudo-aléatoire est engendrée par un registre à décalage 10 bouclé sur lui-même et commandé au rythme de la fréquence d'horloge fH. Dans l'exemple représenté sur la figure 2, le registre 10 possède neuf étages numérotés de 1 à 9. Le système présente deux sorties S1 et S2 reliées respectivement aux étages numéros 7 et 9 du registre 10. Suivant la valeur de la fréquence d'horloge fH (et donc de la distance mesurée), on prend en compte l'une ou l'autre de ces sorties.

Le domaine de fonctionnement du proximètre qui s'étend, par exemple, de 20 à 2 m, est divisé en deux gammes de fonctionnement séparées par un seuil S situé par exemple à 6 m. Un comparateur 12 compare en permanence la fréquence d'horloge à une fréquence correspondant au seuil S choisi. Ce comparateur délivre un signal de commande appliqué à un commutateur 14 qui permet la sélection du nombre de bits de la séquence en fonction de la gamme de fonctionnement. Pour les distances situées dans la gamme allant de 20 à 6 m, la séquence pseudo-aléatoire possède sept bits alors que dans la gamme allant de 6 à 2 m, la séquence pseudo-aléatoire possède neuf bits.

Le comparateur 12 fonctionne en fait avec un cycle d'hystérésis centré sur le seuil S choisi : dans le sens croissant, la commutation a lieu lorsque la distance mesurée dépasse une distance légèrement supérieure à 6 m et, dans le sens décroissant, la commutation a lieu lorsque la distance mesurée est légèrement inférieure à 6 m. De cette manière, on évite des commutations à répétition lorsque la distance mesurée est voisine du seuil S.

Des portes logiques OU 16 et 18 permettent pour chaque cas de sélection de former la séquence pseudo-aléatoire déduite de celle délivrée par le registre 10. La porte "OU" 16 est par exemple connectée en entrée à la sortie des étages numéros 6 et 7 ; la porte "OU" 18 est par exemple connectée en entrée à la sortie des étages 5 et 9. Suivant le signal de commande appliqué, le commutateur 12 relie la sortie de l'une ou l'autre des portes OU 16, 18 à l'entrée de l'étage numéro 1 du registre à décalage 10.

Lorsque le proximètre est en situation d'attente, la fréquence d'horloge fH est fixe et correspond à la distance maximum de mesure, 20 m dans cet exemple. Lorsqu'un écho significatif est détecté, la fréquence d'horloge fH est asservie sur la distance mesurée et augmente en relation avec la diminution de cette distance.

Tant que l'on reste dans la gamme allant de 20 à 6 m, le nombre n de bits de la séquence pseudo-aléatoire est égal à 7. En se reportant à la figure 1, on comprend que les raies du spectre du signal émis s'éloignent les unes des autres et que le spectre s'étale.

Lorsque la distance mesurée franchit le seuil S fixé, le changement de gamme de fonctionnement entraîne une variation du nombre n de bits de la séquence pseudo-aléatoire qui passe de 7 à 9. Cela permet de "resserrer" les raies du spectre du signal émis, donc de maintenir la distance d'ambiguïté suffisamment éloignée pour ne pas perturber la mesure. Par ailleurs, le seuil de commutation et le nombre de bits dans chaque gamme sont tels que le rapport fH/2ⁿ-1 n'est jamais inférieur à la limite supérieure de la zone de dispersion Doppler, de manière à conserver un rapport signal/bruit maximum.

Bien entendu, lorsque l'engin détecté s'éloigne et franchit le seuil de distance en sens inverse, la séquence pseudo-aléatoire repasse de neuf à sept bits.

Grâce à un procédé conforme à l'invention, il est donc possible de maintenir la distance d'ambiguïté éloignée et de conserver un rapport signal/bruit maximum : on peut effectuer des mesures de proximétrie à une distance aussi faible que vingt mètres d'une surface réfléchissante comme le sol.

L'invention ne se limite nullement à l'exemple de réalisation plus spécialement décrit et représenté ; elle en admet toutes les variantes. Ainsi, d'autres dispositifs, utilisant des mémoires par exemple, peuvent être réalisés pour mettre en oeuvre le procédé de l'invention.

En outre, en restant dans le cadre de l'invention, le nombre de gammes de fonctionnement n'est pas limité à deux ; le nombre de bits choisi peut être différent de sept et neuf. Ces chiffres dépendent de l'application envisagée.

## Revendications

1. Procédé télemétrique pour mesurer de courtes distances consistant à émettre un signal electromagnétique module par une séquence pseudo-aléatoire composée d'un nombre n de bits délivrés à une fréquence d'horloge fH variable en fonction d'une mesure de corrélation entre un écho du signal modulé émis et le signal modulé retardé de manière connue, la fréquence d'horloge fH correspondant à la distance à mesurer, caractérisé en ce que, la fréquence d'horloge fH variant dans un domaine de fonctionnement divisé en plusieurs gammes de fonctionnement, le procédé consiste à modifier le nombre n de bits de la séquence pseudo-aléatoire en fonction des changements de gamme de fonctionnement de la fréquence d'horloge fH.

2. Procédé selon la revendication 1, caractérisé en ce que le nombre n de bits de la séquence pseudo-aléatoire est augmenté lorsqu'on passe d'une gamme inférieure à une gamme supérieure de fréquence d'horloge.

3. Procédé selon l'une quelconque des revendications 1 et 2, caractérisé en ce que le nombre de bits de la séquence pseudo-aléatoire est choisi de manière à ce que le rapport fH/2ⁿ-1 soit supérieur à une valeur fixée.

4. Procédé selon l'une quelconque des revendications 1 à 3, caractérisé en ce que le domaine de fonctionnement comporte au moins deux gammes de fonctionnement séparées par un seuil en fréquence correspondant à une distance sensiblement égale à 6 m.

## Patentansprüche

1. Telemetrieverfahren zur Messung kurzer Enfernungen, bei dem ein elektromagnetisches Signal ausgesendet wird, das mit einer pseudo zufälligen Sequenz moduliert ist, die aus einer Anzahl von n Bits zusammengesetzt ist, die mit einer Taktfrequenz fH abgegeben werden, die in Abhängigkeit von einer in bekannter Weise durchgeführten Korrelationsmesssung zwischen einem Echo des ausgesendeten modulierten Signals und dem verzögerten ausgesendeten Signal variiert, wobei die Taktfrequenz fH der zu messenden Entfernung entspricht, **dadurch gekenn****zeichnet**, daß die Taktfrequenz fH in einem in mehrere Betriebsbänder unterteilten Betriebsbereich variiert und daß das Verfahren darin besteht, daß die Zahl n der Bits der pseudo-aleatorischen Sequenz in Abhängigkeit von den Änderungen des Betrisbsbandes der Taktfrequenz fH modifiziert wird.

2. Verfahren nach Anspruch 1, dadurch gekennzeichnet, daß die Zahl n der Bits der pseudozufälligen Sequenz beim Übergang von einem unteren in ein oberes Freqenzband erhöht wird.

3. Verfahren nach einem der Ansprüche 1 und 2, dadurch gekennzeichnet, daß die Zahl n der Bits der pseudo zufälligen Sequenz so gewählt wird, daß das Verhältnis fH/2ⁿ -1 größer ist als ein festgelegter Wert.

4. Verfahren nach einem der Ansprüche 1 bis 3, dadurch gekennzeichnet, daß der Betriebsbereich zumindest zwei Betriebsbänder umfaßt, die durch eine Frequenzschwelle getrennt sind, die einer Entfernung von etwa 6 Metern entspricht.

## Claims

1. Telemetric process for measuring short distances consisting in transmitting an electromagnetic signal modulated by a pseudo-random sequence composed of a number n of bits delivered at a clock frequency fH which is variable as a function of a measurement of correlation between an echo of the transmitted modulated signal and the modulated signal delayed in a known manner, the clock frequency fH corresponding to the distance to be measured, characterized in that, the clock frequency fH varying within an operating region divided into plural operating brackets, the process consists in modifying the number n of bits of the pseudo-random sequence as a function of the changes of operating bracket of the clock frequency fH.

2. Process according to Claim 1, characterized in that the number n of bits of the pseudo-random sequence is increased when passing from a lower bracket to a higher bracket of clock frequency.

3. Process according to either one of Claims 1 and 2, characterized in that the number of bits of the pseudo-random sequence is chosen such that the ratio fH/2ⁿ-1 is greater than a fixed value.

4. Process according to any one of Claims 1 to 3, characterized in that the operating region includes at least two operating brackets separated by a frequency threshold corresponding to a distance substantially equal to 6 m.
